(19) Europäisches Patentamt
European Patent Office
Office européen des brevets

(11) EP 3 133 117 A1

(12) # EUROPEAN PATENT APPLICATION

(43) Date of publication:
**22.02.2017 Bulletin 2017/08**

(21) Application number: **15181261.7**

(22) Date of filing: **17.08.2015**

(51) Int Cl.:
***C08L 5/16*** *(2006.01)*
***C09J 133/00*** *(2006.01)*
***C08K 5/11*** *(2006.01)*
***C08L 33/06*** *(2006.01)*
***C08K 5/00*** *(2006.01)*
***C08K 5/05*** *(2006.01)*
***C09J 133/06*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Henkel AG & Co. KGaA**
**40589 Düsseldorf (DE)**

(72) Inventors:
- **TADEN, Andreas**
  **40597 Düsseldorf (DE)**
- **ITO, Kenji**
  **40597 Düsseldorf (DE)**
- **BUJ VILALTA, Victor Dario**
  **41469 Neuss (DE)**

(54) ## WATER-BASED POLYMER SYSTEM FOR LABELING ADHESIVE APPLICATIONS

(57) The present invention relates to a water-based polymer system comprising (i) at least one hydrophobically modified water soluble polymer (HWSP) in an amount of 10 to 68 wt.-% relative to the polymer system, said HWSP having a weight average molecular weight Mw below 1,000,000 g/mol, wherein the at least one HWSP is obtainable by polymerizing a monomer mixture comprising: (a) at least one ethylenically unsaturated nonionic monomer comprising a hydrophobic moiety, in an amount of 0.01 to 10 wt.-% relative to the monomer mixture; (b) at least one ethylenically unsaturated anionic monomer, in an amount of 15 to 30 wt.-%, relative to the monomer mixture; and (c) at least one ethylenically unsaturated nonionic $C_3$-$C_5$ carboxylic acid $C_1$-$C_8$ alkyl ester monomer, in an amount of 35 to 84.99 wt.-% relative to the monomer mixture; (ii) at least one organic additive having a solubility in water at 25°C of between 2 and 120 g/L in an amount of 0.1 to 10 wt.-% relative to the polymer system; (iii) at least one stabilizer in an amount of 1 to 30 wt.-% based on the HWSP solid content; and (iv) water. Also encompassed are adhesives comprising said polymer system and the use thereof as an adhesive, preferably as a labeling adhesive.

EP 3 133 117 A1

## Description

The present invention relates to a water-based polymer system, in particular adhesive system, comprising hydrophobically modified water soluble (associative) polymers with improved condensed water resistance and satisfactory wet tack, wet-out and washability via regulated self-assembly of hydrophobically modified water soluble (associative) polymers, in particular for use as returnable bottle labeling adhesives.

Most synthetic water-based adhesives lack a fast setting mode, especially when the substrates cannot absorb water in significant amounts. This becomes even more pronounced when wet (and hard) surfaces have to be bonded together. In addition, many water-based adhesives lack adhesion to non-polar substrates, because they do not carry hydrophobic counterparts within their intrinsic structure. With respect to labeling adhesives however a constantly growing market demand for the substitution of natural product based adhesives by synthetic products can be observed.

To date, alkali soluble latexes are widely used as rheology modifiers for numerous applications, such as water borne paints and coatings, oil recovery and in other fields. They represent a special class of polymers, which are stable suspensions at lower pH values, but deprotonate and become polyelectrolytes at higher pH. These types of systems are prepared by using emulsion polymerization technique and therefore are referred in literature as alkali soluble emulsion (ASE). Hydrophobically modified alkali soluble emulsions (HASE) are subject to intensive investigation as they exhibit superior performance and characteristics compared to conventional ASE. In the deprotonated state HASE systems contain ionogenic groups that are highly hydrophilic and provide water solubility for the polymer. Furthermore they are partially substituted by or modified with highly hydrophobic fragments, which leads to formation of hydrophobic junctions due to hydrophobic forces and consequently to adjustable rheological and mechanical behavior. HASE systems represent an improvement over non-modified alkali soluble emulsions, as they show associative behavior based on hydrophobic segments which can aggregate in the aqueous phase. This behavior shares strong similarity with surfactant micellation and can counteract the electrostatic repulsion forces from the polyelectrolyte backbones. In addition, it leads to drastically altered rheological and mechanical properties. This micellation-like association corresponds to the formation of hydrophobic domains that physically crosslink the polyelectrolyte network. Unlike covalent crosslinking this hydrophobic association is non-permanent and can reversibly disassemble upon application of relatively mild shear forces and once said shear forces are no longer applied self-organized reassembly occurs. Accordingly, the introduction of physical crosslinks can be used to design materials with highly efficient energy dissipation mechanisms or self-healing characteristics.

Generally, hydrophobic modification of water-soluble polymers with different backbone chemistries is known, the most prominent examples including HASE being:

- HASE: Hydrophobically-modified alkali soluble/swellable emulsion
- HEUR: Hydrophobically-modified ethyleneoxide urethane rheology modifier
- HMPE: Hydrophobically-modified polyether
- HMHEC: Hydrophobically-modified hydroxyethyl cellulose

The above listed polymer categories are frequently used as associative rheology modifiers in a variety of applications, like paints, protective coatings, detergents, cosmetics and more. Typically, they are used as additives in small amounts and possess either high molecular weights or a high degree of hydrophobic modification to maximize the rheological impact. In the following, hydrophobically modified water-soluble polymer with association capability and stimuli-response, including those listed above, will be referred to as hydrophobically modified water-soluble polymers (HWSP).

HWSP association bears strong similarities with surfactant micellation, which was studied in great detail by various research groups and fundamentally describes the spontaneous self-association of highly amphiphilic molecules driven by hydrophobic interaction forces. For example it is well known, that in case of n-alkyl-substituted surfactants the critical micellation concentration (CMC) is strongly dependent on the number of carbon atoms in the alkyl chain as the hydrophobic part. As a general rule, the CMC decreases by a factor of about 2 for ionic surfactants (without added salt) and by a factor of about 3 for non-ionic surfactants on adding one methylene group to the alkyl chain. Longer n-alkyl surfactant chains also lead to higher aggregation number in micelles, and correspondingly carbon chain length in hydrophobically modified polymer systems shows significant impact on the physically crosslinked network structure and the rheological behavior.

HASE polymers can be seen as model system to study the general applicability of hydrophobic forces to obtain water-based adhesives with specific stimuli-response and improved properties based on HWSP. One reason to select HASE as model system for HWSP is that based on advanced polymerization technology their composition including the degree of hydrophobic-modification and molecular weight can be adjusted over a wide range. This situation allows the investigation of various HASE polymers with systematically changed composition and the use of these results for deriving important structure-property relationships that can be generalized to other HWSP systems.

Stimuli-responsive materials have attracted significant research interest over the recent years, because their adaptive nature enables convenient control for a variety of different applications, ranging from sensors, drug delivery, tissue engineering to more simplistic rheology modifiers. In each case, the stimuli-responsiveness needs to be well understood and adjustable, which is a mandatory requirement for integrated technological solutions in order to comply with specific functional needs. For this reason, the elucidation of the most important structure-property relationships is of fundamental importance and another reason why HASE systems have been utilized to identify how HSWP can be turned into water-based adhesives with adjustable stimuli-response.

At present, many known synthetic adhesive labeling systems including standard (H)ASE have the drawback that they exhibit a very strong drop in viscosity upon dilution with water accompanied by a significant drop in their adhesive performance capabilities, which leads to issues for example in wet bottle labeling. For such applications, it would be desirable to have synthetic alternatives to "casein" labeling adhesives available. Casein is a natural protein with a complex structure and interaction behavior forming various conformations, aggregates and (sub)-structures starting to "thicken" when it comes into contact with a cold and wet interface. So far it remains difficult to obtain synthetic labeling adhesives which can mimic this behavior.

In addition, it would be desirable to have a synthetic alternative to casein-based adhesives, since casein is a comparably expensive component with a high price volatility and, as a natural product, shows significant quality variations that can cause quality issues in the final product.

There have been efforts to provide synthetic alternatives to casein-based adhesives. For example, international patent publication WO 2001/85866 discloses aqueous bottle labeling adhesives consisting of styrene maleic anhydride copolymer and rosin. While the formulation exhibited satisfactory removability and ice water resistance, it lacked condensed water resistance due to lack of mechanisms to maintain adhesion strength upon dilution by condensed water on bottle surfaces. In addition, another drawback lies in that the copolymer itself has little tack so that rosin is needed as a tackifier. However, the hydrophobic nature of rosins that are available in the market often causes segregation during storage, which will cause quality issues.

Other labeling adhesives based on non-casein biopolymers with borax and zirconium salts as crosslinkers are, for example, described in US 2007/240823. While the formulations showed satisfactory removability, the condensed water resistance directly after application was not fully satisfactory with market requirements as satisfactory results were only obtained after 1 or 2 hours. In addition, the use of the disclosed inorganic salt crosslinkers has been recently restricted due to toxicology issues.

There is thus still need in the art for alternative systems that overcome the above drawbacks of existing technologies. The present invention meets this need by providing a water-based polymer system based on hydrophobically modified water soluble associative polymers that exhibits improved condensed water resistance. It has been found that in these systems the self-assembly of HWSP can be retarded by addition of moderately water soluble organic compounds. The retarded self-assembly is reformed upon dilution after application on wet (bottle) surfaces and then associative strength is regained to exhibit excellent condensed water resistance. The formulations provided herein thus realize superior condensed water resistance comparable to those of casein based adhesives while at the same time exhibiting satisfactory wet tack, wet-out and washability properties required for returnable bottle labeling applications.

In a first aspect, the present invention thus relates to a water-based polymer system comprising

(i) at least one hydrophobically modified water soluble polymer (HWSP) in an amount of 10 to 68 wt.-%, preferably 15 to 60 wt.-%, more preferably 15 to 50 wt.-%, relative to the polymer system, said HWSP having a weight average molecular weight Mw below 1,000,000 g/mol, preferably between 15,000 and 500,000 g/mol, more preferably between 20,000 g/mol and 200,000 g/mol, most preferably 25,000 to 100,000 g/mol, wherein the at least one HWSP is obtainable by polymerizing a reaction mixture comprising a monomer mixture comprising:

(a) at least one ethylenically unsaturated nonionic monomer comprising a hydrophobic moiety, preferably a substituted or unsubstituted $C_{10}$-$C_{26}$ hydrocarbon moiety, more preferably a substituted or unsubstituted $C_{10}$-$C_{26}$ alkyl moiety, wherein the monomer is optionally an ethylenically unsaturated $C_3$-$C_6$ carboxylic acid ester of formula (I) $R_1HC=CHR_2-(CH_2)w-C(=0)-[O-(CH_2)_x]_y-OR_3$, wherein $R_1$ and $R_2$ are independently H or $CH_3$, $R_3$ is $C_{10-26}$ alkyl, w is 0 or 1, x is 1-10, and y is 1-100, in an amount of 0.01 to 10 wt.-%, preferably 0.1 to 10 wt.-%, more preferably 0.5 to 5 wt.-% relative to the monomer mixture;

(b) at least one ethylenically unsaturated anionic monomer, preferably an ethylenically unsaturated $C_3$-$C_8$ carboxylic acid monomer, in an amount of 15 to 30 wt.-% relative to the monomer mixture; and

(c) at least one ethylenically unsaturated nonionic $C_3$-$C_5$ carboxylic acid $C_1$-$C_8$ alkyl ester monomer, in an amount of 35 to 84.99 wt.-%, preferably 65 to 80 wt.-% relative to the monomer mixture;

(ii) at least one organic additive having a solubility in water at 25°C of between 2 and 120 g/L, preferably 5-100 g/L, more preferably 15-80 g/L, in an amount of 0.1 to 10 wt.-%, preferably 0.5 to 5 wt.-%, relative to the polymer system;

(iii) at least one stabilizer in an amount of 1 to 30 wt.-%, preferably 1 to 10 wt.-%, more preferably 1.2 to 6 wt.-%, based on the HWSP solid content; and
(iv) water.

In various embodiments, the at least one ethylenically unsaturated $C_3$-$C_5$ carboxylic acid $C_1$-$C_8$ alkyl ester monomer comprises an ethylenically unsaturated $C_3$-$C_5$ carboxylic acid $C_1$-$C_8$ alkyl ester monomer, the homopolymer of which has a glass transition temperature $T_g$ < 25°C.
In various embodiments, the at least one HWSP has

a. a solubility at 60°C of 5 g/100 mL or more in a water-based solvent system containing at least 70 wt.-%, preferably at least 80 wt.-%, more preferably at least 90 wt.-% water, with the remainder optionally being an amphiphilic additive; and/or
b. a glass transition temperature $T_g$ as calculated based on the Fox equation as described below of < 40 °C, preferably <30°C, more preferably < 20°C and most preferably < 4°C; and/or
c. an apparent pKa (as described below) of >7.0, preferably in the range of 7.5 to 9.5, more preferably 7.5 to 9, and most preferably 7.5 to 8.5.

The water-based polymer system may in various embodiments be a hydrophobically modified alkali soluble associative (HASE) polymer system, with the HSWP preferably being an acrylic HASE polymer.
In still another aspect, the invention also features adhesive compositions that comprise or consist of the water-based polymer systems described herein. The adhesives may preferably be labeling adhesives, for example for the labeling of bottles.
In a still further aspect, the invention also encompasses the use of the water-based polymer system described herein as a component of an adhesive composition, preferably a labeling adhesive.
In the following, the invention is described in greater detail. It is however understood that the present invention is not limited to the below embodiments, but can easily be adapted to use other monomers, stabilizers, surfactants, and polymerization initiators. Such alternative embodiments are also encompassed by the scope of the instant invention. In particular, when in the below detailed description reference is made to HASE systems it is understood that these systems serve for illustrative purposes only and that the invention is not limited to such systems, but encompasses other associative systems, such as those described above. Transferring the below embodiments described in relation to HASE systems to other hydrophobically modified associative polymer systems would be a matter of mere routine for those skilled in the art and is thus contemplated in and fully covered by the present invention.
The HWSPs of the invention may have a solubility of 5 g/100 mL or more in a water-based solvent system containing at least 70 wt.-%, preferably at least 80 wt.-%, more preferably at least 90 wt.-% water, at 60°C, with the remainder of the water-based solvent system optionally being an organic additive. The organic additives that can be used in such solvent systems are described in more detail below. To determine the solubility, a "Metrohm photometer 662" equipped with a measuring probe is used to measure light transmittance. For the actual measurement, visible light (full spectrum) from the source is guided via optical fibers to the probe, which is immersed in the liquid sample. The light emerges from the tip of the probe, travels through the sample solution, is reflected from a mirror and is guided through optical fibers to the detector. Before reaching the detector, an optical filter may be used to allow selective measurement of a certain wavelength. For the present measurements, light of a wavelength of 600 nm was detected. An Ahlborn Almemo multimeter was used to digitally monitor and record transmittance (analog output from photometer) and a light transmittance of ≥98 % (at the selected wavelength) was considered as complete solubility. "A solubility of 5 g/100 mL or more", in the sense of the present invention therefore refers to a polymer system that, if dissolved in a water-based solvent system as described above at a concentration of 5 g/100mL or more, has a transmittance of light of a wavelength of 600 nm of ≥98% at 60°C, as measured with the above-described system.
The polymer systems of the invention are preferably derived from an emulsion or dispersion, in particular O/W heterophase systems, with the continuous phase being water or an aqueous (water-based) solvent, as described below.
The weight average molecular weight $M_w$ can be determined using any known method, including, but not limited to gel permeation chromatography (GPC). The preferred method is GPC with tetrahydrofuran (THF) as eluent according to DIN 55672-1:2007-08, preferably with measurement conditions of 35 °C. For calibration, polymethylmethacrylate standards are used to determine the apparent molecular weights. Based on this method, the weight average molecular weight of the HWSP is less than 1,000,000 g/mol, preferably between 15,000 and 500,000 g/mol, more preferably between 20,000 g/mol and 200,000 g/mol, most preferably 25,000 to 100,000 g/mol.
The monomeric units comprising a hydrophobic moiety, preferably a substituted or unsubstituted $C_{10}$-$C_{26}$ hydrocarbon moiety, more preferably a substituted or unsubstituted $C_{10}$-$C_{26}$ alkyl moiety, can be any monomers that are compatible with the polymer backbone chemistry. The hydrophobic moieties are preferably hydrocarbon moieties with 10 to 26 carbon atoms, but may comprise one or more heteroatoms in the main chain. It is however preferred that the

hydrophobic moiety is an unsubstituted $C_{10}$-$C_{26}$ alkyl moiety that may be linear or branched, including, without limitation, lauryl, tetradecyl, hexadecyl, octadecyl, eicosanyl, and behenyl groups. These groups may be coupled to the reactive moiety of the monomer, such as, without limitation, an ethylenically unsaturated group, via a direct covalent bond or a suitable linker. Suitable linkers include, without limitation, polyoxyalkylenes, such as polyoxyethylene, polyoxypropylene or copolymers thereof.

In various embodiments of the invention, the HWSPs are pH responsive latexes that are stable suspensions at lower pH values, but deprotonate and become polyelectrolytes at higher pH and that contain ionogenic groups, which are partially substituted by or modified with highly hydrophobic fragments, which leads to formation of hydrophobic junctions due to hydrophobic forces and consequently to adjustable rheological and mechanical behavior. Such pH responsive latexes show sharp increase in viscosity upon increasing pH due to deprotonation of acid groups and high electrostatic repulsion, while incorporation of hydrophobic groups facilitates the formation of hydrophobic junctions and alters (and when properly regulated - improves) rheological behavior.

In various embodiments, the HWSPs are HASE polymers, in particular hydrophobically modified acrylic polymers that comprise acid groups distributed throughout the polymer chain. Such HASE polymers may comprise mildly hydrophobic repeating units that together with the acidic repeating units form the bulk of the polymer, while the associative properties are imparted by a small percentage (usually up to 10 %) of associative monomers having hydrophobic moieties. However, as already described above, the present invention is not limited to such HASE polymers.

The term "pH responsive", as used herein, relates to the property of materials, especially polymers, to respond to the changes in the pH of the surrounding medium by protonation and deprotonation of ionic groups, in particular carboxylic acid groups in the polymer chain. Protonation and deprotonation of such pH responsive polymers is reversible and influences their rheological properties due to decreased and increased electrostatic repulsion in the polymer, especially in polar solvents (e.g. water or water/alcohol mixtures). Such materials may swell or collapse depending on the pH of their environment.

The "apparent $pK_a$", as used herein, means the pH value which corresponds to the midpoint of neutralization, wherein neutralization is carried out as follows: an appropriate amount of latex (solid content 20 %) is diluted to 4 wt.-% with 50 ml distilled water. 0,1 M NaOH solution is added to the latex at constant rate of 0,1 ml/min with constant stirring. The pH change is monitored and potentiometric titration curves are given as pH against the amount of added alkali solution. All measurements are conducted at 20 °C. The 0 point on the x-axis of the plots is considered as the starting point of the neutralization. The neutralization degree is arbitrarily defined to be 100 % at a pH value of $9.6 \pm 0.2$. The pH which corresponds to 50 % on the y-axis is defined as the midpoint of the neutralization or "apparent pKa".

The HWSP, in particular the HASE polymer, is obtainable by polymerizing a reaction mixture comprising a monomer mixture comprising:

(a) at least one ethylenically unsaturated monomer comprising a hydrophobic moiety, preferably a substituted or unsubstituted $C_{10}$-$C_{26}$ hydrocarbon moiety, more preferably a substituted or unsubstituted $C_{10}$-$C_{26}$ alkyl moiety, wherein the monomer is optionally an ethylenically unsaturated $C_3$-$C_6$ carboxylic acid ester of formula (I) $R_1HC=CHR_2-(CH_2)_w-C(=O)-[O-(CH_2)_x]_y-OR_3$, wherein $R_1$ and $R_2$ are independently H or $CH_3$, $R_3$ is $C_{10-26}$ alkyl, w is 0 or 1, x is 1-10, and y is 1-100, in an amount of 0.01 to 10 wt.-%, preferably 0.1 to 10 wt.-%, more preferably 0.5 to 5 wt.-% relative to the monomer mixture;
(b) at least one ethylenically unsaturated anionic monomer, preferably an ethylenically unsaturated $C_3$-$C_8$ carboxylic acid monomer, in an amount of 15 to 30 wt.-% relative to the monomer mixture; and
(c) at least one, preferably at least two, ethylenically unsaturated $C_3$-$C_5$ carboxylic acid $C_1$-$C_8$ alkyl ester monomer(s), in an amount of 35 to 84.99 wt.-%, more preferably 65 to 80 wt.-% relative to the monomer mixture.

In various embodiments, the at least one or at least one of the at least two ethylenically unsaturated $C_3$-$C_5$ carboxylic acid $C_1$-$C_8$ alkyl ester monomer(s) comprises an ethylenically unsaturated $C_3$-$C_5$ carboxylic acid $C_1$-$C_8$ alkyl ester monomer, the homopolymer of which has a glass transition temperature $T_g$ < 25°C.

In various embodiments, the monomer mixture comprises as component (c) at least two ethylenically unsaturated $C_3$-$C_5$ carboxylic acid $C_1$-$C_8$ alkyl ester monomers comprising a first ethylenically unsaturated $C_3$-$C_5$ carboxylic acid $C_1$-$C_8$ alkyl ester monomer, the homopolymer of which has a glass transition temperature $T_g$ >25°C, and a second ethylenically unsaturated $C_3$-$C_5$ carboxylic acid $C_1$-$C_8$ alkyl ester monomer, the homopolymer of which has a glass transition temperature $T_g$ < 25°C.

"At least one", as used herein, relates to one or more, preferably 1, 2, 3, 4, 5, 6, 7, 8, 9, 10 or more. It is understood that this term, when used in combination with the described monomers or surfactants, does not relate to the absolute number of molecules, but rather to the type of the monomer or surfactant used. By way of example only, the term "at least one $C_3$-$C_5$ carboxylic acid monomer" thus means that one or more different $C_3$-$C_5$ carboxylic acid monomers can be used, for example methacrylic acid or a combination of methacrylic acid and acrylic acid.

The glass transition temperature (herein also referred to as "$T_g$") of the polymers is calculated from the $T_g$ of

the homopolymers of each monomer used, i.e. the polymer obtained when each monomer is polymerized individually. Specifically, the $T_g$ of each copolymer can be obtained by calculation based on the Fox equation:

$$\frac{1}{T_g} = \sum_{i=1}^{n} \frac{w_i}{T_{g,i}}$$

wherein $T_g$ is the theoretical $T_g$ of the copolymer, $w_i$ is the proportion of the weight of the n-th monomer n to be contained in the monomer mixture, $T_{g,i}$ is the $T_g$ of the homopolymer of the n-th monomer n, and n is a positive integer which is the number of the monomers constituting the copolymer. In the calculation as used herein the monomers with less than 5% content were neglected. The $T_g$ values for homopolymers can be taken from literature. For the main monomers in the examples given below, the homopolymer $T_g$ values used in the calculations are briefly listed: methyl methacrylate (herein also referred to as "MMA"), $T_g$ = 105°C; n-butyl acrylate (herein also referred to as "BA"), $T_g$ = -56°C; 2-ethylhexyl acrylate (herein also referred to as "2EHA"), $T_g$ = -70°C; acrylic acid (herein also referred to as "AA"), $T_g$ = 106°C; methacrylic acid (herein also referred to as "MAA"), $T_g$ = 215°C; n-butyl methacrylate (herein also referred to as "BMA"), $T_g$ = 20°C. In case other comonomers than those listed above are used (in contents exceeding 5 wt.-% in relation to the total monomer content) the preferred literature reference for their homopolymer $T_g$ values is the "Polymer Handbook" (J. Brandrup, E. H. Immergut, E. A. Grulke, "Polymer Handbook", 4 edition, Wiley, 2003).

The monomers used in the polymers described herein include ethylenically unsaturated carboxylic acids and alkyl esters thereof. Typical monomers based on ethylenically unsaturated compounds that can be used according to the present invention, without being limited thereto, include maleic acid, methylmaleic acid, fumaric acid, and the respective alkyl esters thereof, (meth)acrylic acid and esters thereof, crotonic acid and esters thereof, itaconic acid and esters thereof, the acid alkyl esters being in each case selected from esters having $C_1$-$C_8$ carbon atoms or $C_{10}$-$C_{26}$ carbon atoms. The alkyl esters described herein can be branched or straight chain.

In various embodiments, the ethylenically unsaturated $C_3$-$C_8$, preferably $C_3$-$C_5$ carboxylic acid monomers are selected from methacrylic acid (MAA), acrylic acid (AA), fumaric acid, methyl maleic acid, maleic acid, itaconic acid, crotonic acid, or mixtures thereof, preferably methacrylic acid, acrylic acid or mixtures thereof, more preferably methacrylic acid. Also contemplated are the respective salts thereof, i.e. the salts of the listed acids with any suitable cation, preferably metal cation, such as, without limitation sodium and potassium, or ammonium.

The ethylenically unsaturated carboxylic acid alkyl ester monomers used according to the methods described herein are preferably acrylic acid or methacrylic acid alkyl esters.

The ethylenically unsaturated $C_3$-$C_5$ carboxylic acid $C_1$-$C_8$ alkyl ester monomer may be a (meth)acrylic acid $C_1$-$C_8$ alkyl ester monomer, preferably a (meth)acrylic acid $C_2$-$C_8$ alkyl ester monomer, more preferably a (meth)acrylic acid $C_3$-$C_8$ alkyl ester monomer the homopolymer of which has a $T_g$ of below 25°C. Examples for such monomers include, without limitation, (meth)acrylic acid 2-ethylhexyl ester and (meth)acrylic acid butyl ester.

Preferred are mixtures of such monomers with another ethylenically unsaturated $C_3$-$C_5$ carboxylic acid $C_1$-$C_8$ alkyl ester monomer the homopolymer of which has a Tg of more than 25°C. Such monomers include, without limitation, a methacrylic acid $C_1$-$C_3$ alkyl ester monomer, more preferably a methacrylic acid methyl ester monomer.

In a preferred embodiment, such a mixture comprises as a first monomer a methacrylic acid $C_1$-$C_8$ alkyl ester monomer, preferably a methacrylic acid $C_1$-$C_3$ alkyl ester monomer, more preferably a methacrylic acid methyl ester monomer; and/or as a second monomer an acrylic acid $C_2$-$C_8$ alkyl ester monomer, preferably an acrylic acid $C_3$-$C_5$ alkyl ester monomer, more preferably an acrylic acid butyl ester monomer or an acrylic acid 2-ethylhexyl ester monomer.

In a particularly preferred embodiment, the ethylenically unsaturated $C_3$-$C_5$ carboxylic acid $C_1$-$C_8$ alkyl ester monomer comprises or consists of a mixture of methyl methacrylate and butyl acrylate. Such mixture can advantageously replace the commonly used ethyl acrylate, which is less desirable due to its low odor threshold. In such a mixture, the butyl acrylate or the 2-ethylhexyl acrylate lowers the glass transition temperature and maintains emulsion droplet stability due to its higher hydrophobicity compared to other monomers employed.

In the above described mixtures, the weight ratio of the first to the second ethylenically unsaturated $C_3$-$C_5$ carboxylic acid $C_1$-$C_8$ alkyl ester monomer, in particular of the methyl methacrylate to the butyl acrylate or 2-ethylhexyl acrylate, may be in the range of 1:10 to 10:1, preferably 1:5 to 5:1, more preferably 1:2 to 1:5 and most preferably 1:1 to 1:5.

In various embodiments, the ethylenically unsaturated monomer comprising a hydrophobic moiety is a compound of formula (I) $R_1HC=CHR_2-(CH_2)_w-C(=O)-[O-(CH_2)_x]_y-OR_3$, wherein $R_1$ and $R_2$ are independently H or $CH_3$, $R_3$ is $C_{10-26}$ alkyl, w is 0 or 1, x is 1-10, and y is 1-100. In various embodiments, (i) $R_1$ is H and $R_2$ is H or $CH_3$ and w is 0 or 1; (ii) $R_2$ is H and $R_1$ is H or $CH_3$ and w is 0 or 1; (iii) $R_1$ is $CH_3$ and $R_2$ is H and w is 0 or 1, (iv) $R_1$ is H and $R_2$ is H and w is 1; (v) $R_1$ is H and $R_2$ is $CH_3$ and w is 0; or (vi) $R_1$ is H and $R_2$ is Hand w is 0. In various embodiments, $R_3$ is $C_{12-18}$ alkyl, $C_{10-22}$ alkyl, $C_{14-24}$ alkyl or $C_{18-22}$ alkyl. In various embodiments, y is 0 and, optionally, $R_3$ is $C_{10-22}$ alkyl,

preferably $C_{12-18}$ alkyl. In various embodiments, y is not 0 and, optionally, $R_3$ is $C_{10-22}$ alkyl, $C_{14-24}$ alkyl or $C_{18-22}$ alkyl. In various embodiments, y is 10-50, preferably 20-30. In various embodiments, x is 1-4, preferably 2 or 3, more preferably 2.

Accordingly, in some embodiments the ethylenically unsaturated monomer comprising a hydrophobic moiety is

i. a methacrylic acid ester with a moiety comprising or consisting of an $C_{10}$-$C_{26}$ alkyl group, preferably a methacrylic acid $C_{10}$-$C_{26}$ alkyl ester monomer or a methacrylic acid polyoxyalkylene $C_{10}$-$C_{26}$ alkyl ester monomer, more preferably a methacrylic acid $C_{10}$-$C_{22}$ alkyl ester monomer or a methacrylic acid polyoxyalkylene $C_{10}$-$C_{22}$ alkyl ester monomer, most preferably a methacrylic acid $C_{12}$-$C_{18}$ alkyl ester monomer or a methacrylic acid polyethylene oxide $C_{10}$-$C_{22}$ alkyl ester monomer, optionally with 10-50, preferably 20-30 ethylene oxide units; or

ii. an acrylic acid ester with a moiety comprising or consisting of an $C_{10}$-$C_{26}$ alkyl group, preferably an acrylic acid $C_{10}$-$C_{26}$ alkyl ester monomer or an acrylic acid polyoxyalkylene $C_{10}$-$C_{26}$ alkyl ester monomer, more preferably an acrylic acid $C_{10}$-$C_{22}$ alkyl ester monomer or an acrylic acid polyoxyalkylene $C_{10}$-$C_{22}$ alkyl ester monomer, most preferably an acrylic acid $C_{12}$-$C_{18}$ alkyl ester monomer or an acrylic acid polyethylene oxide $C_{10}$-$C_{22}$ alkyl ester monomer, optionally with 10-50, preferably 20-30 ethylene oxide units; or

iii. a mixture of (i) and (ii).

In various embodiments, the ethylenically unsaturated monomer comprising a hydrophobic moiety is a compound of formula (I), wherein (i) $R_1$ is H, $R_2$ is $CH_3$, w is 0, y is 0, $R_3$ is $C_{10-22}$ alkyl, preferably $C_{12-18}$ alkyl; or (ii) $R_1$ is H, $R_2$ is H, w is 0, y is 0, $R_3$ is $C_{10-22}$ alkyl, preferably $C_{12-18}$ alkyl; or (iii) $R_1$ is H, $R_2$ is $CH_3$, w is 0, y is 20-30, x is 2 or 3, $R_3$ is $C_{14-24}$ alkyl, preferably $C_{18-22}$ alkyl; or (iv) $R_1$ is H, $R_2$ is H, w is 0, y is 20-30, x is 2 or 3, $R_3$ is $C_{14-24}$ alkyl, preferably $C_{18-22}$ alkyl. In said embodiments, x is preferably 2.

Stearyl 25(EO) methacrylate and behenyl 25(EO) methacrylate are, for example, commercially available from BASF SE under the trademark names SPEGMA 1100 and BEPEGMA 1100, respectively.

In other embodiments, the ethylenically unsaturated $C_3$-$C_6$ carboxylic acid $C_{10}$-$C_{26}$ alkyl ester monomer may be an acrylic acid $C_{14}$-$C_{18}$ alkyl ester monomer. Suitable monomers include, without limitation, lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate and mixtures thereof. Again, mixtures of the afore-described methacrylic acid alkyl esters and acrylic acid alkyl esters may be used.

In various embodiments, any of the above esters may comprise one or more functional groups in the alkyl moiety provided that the functional groups do not react with each other under the reaction conditions described herein. Exemplary compounds include those that comprise amino, hydroxyl or N-methylol groups in the alcohol chain, such as hydroxyethyl (meth)acrylate, hydroxypropyl (meth)acrylate, hydroxybutyl (meth)acrylate, (meth)acrylamide, hydroxyethyl acrylamide, allyl carbamate, N-methylol (meth)acrylamide, N-methylol allyl carbamate as well as the N-methylolesters, acrylamidomethoxy acetic acid methyl esters, N-dimethylamino propyl methacrylamide, N-methyl (meth)acrylamide, N-butyl (meth)acrylamide, N-cyclohexyl (meth)acrylamide, acryl nitrile and the like. The amount of these functionalized compounds should however preferably be below 15 wt.-% relative to the total amount of these esters.

In one specific embodiment of the described methods, the at least one ethylenically unsaturated $C_3$-$C_8$ carboxylic acid monomer is selected from the group consisting of methacrylic acid (MAA) and acrylic acid (AA), the at least one ethylenically unsaturated $C_3$-$C_5$ carboxylic acid $C_1$-$C_8$ alkyl ester monomer is selected from the group consisting of methyl methacrylate (MMA), butyl acrylate (BA), 2-ethylhexyl acrylate (2-EHA) and mixtures thereof, preferably mixtures of MMA and BA or MMA and 2-EHA, and the at least one ethylenically unsaturated hydrophobic $C_3$-$C_6$ carboxylic acid ester monomer is selected from the group consisting of lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate, octadecyl 25(EO) (meth)acrylate, eicosanyl 25(EO) (meth)acrylate, behenyl 25(EO) (meth)acrylate and mixtures thereof.

In addition to the above-listed monomers, the monomer mixture may further comprise other monomers, for example styrene monomers and/or monomers comprising siloxane groups, such as, without limitation, vinyl trimethoxy silanes, alkylvinyl dialkoxy silanes or (meth)acryloxyalkyl trialkoxy silanes. Concrete examples include, without limitation, (meth)acryloxyethyl trimethoxy silane and (meth)acryloxypropyl trimethoxy silane. Also suitable are polysiloxane macromonomers having a number average molecular weight $M_n$ of 1000 to 40000 and comprising 0.5 to 2.5 ethylenically unsaturated double bonds per molecule. Preferred compounds are those that have a number average molecular weight $M_n$ of 2000 to 20000, preferably 2500 to 10000, more preferably 3000 to 7000, and 0.5 to 2.5, preferably 0.5 to 1.5 ethylenically unsaturated double bonds per molecule. Such compounds are for example disclosed on pages 5-7 of DE 38 07 571 A1, columns 3-7 of DE 37 06 095 A1, pages 3-6 of EP 0358153 B1, columns 5-9 of US 4,754,014 A1, in DE 44 21 823 A1 or on pages 12-18 of WO 92/22615. The number average molecular weight $M_n$ can be determined similarly as the weight average molecular weight $M_w$ according to the above-described method.

Other suitable monomers include polyunsaturated monomers that can acts as crosslinkers. If present, such polyunsaturated monomers are only present in comparably small amounts, i.e. typically up to 5 wt.-%, preferably up to

3 wt.-% relative to the total weight of the monomer mixture. Preferred are monomers that contain two vinyl groups. Exemplary compounds that are suitable as crosslinking monomers include, without limitation, diallyl phthalates, diallyl maleinate, triallyl cyanurate, tetraallyl oxyethane, divinyl benzene, allyl acrylate, allyl methacrylate, vinyl crotonate, butanediol-1,4-dimethacrylate, triethyleneglycol dimethacrylate, divinyl adipate and combinations thereof.

In various embodiments, the monomer mixture contains ethylenically unsaturated carboxylic acid monomers in a concentration range of from 15-30 wt.%. The at least one ethylenically unsaturated $C_3$-$C_5$ carboxylic acid $C_1$-$C_8$ alkyl ester monomer may be contained in a concentration range of from 35 to 84.99 wt.%, preferably 45-84.99 wt.%, more preferably 65-80 wt.%. The associative monomer having a hydrophobic moiety may be comprised in a concentration range of from 0.01 to 10 wt.%, preferably 0.1-10 wt.%, particularly preferably 0.5-5 wt.%, most preferably 1-5 wt.%.

As described above, the monomer mixture may comprise a mixture of methyl methacrylate and butyl acrylate. Those two monomers are preferably used in a weight ratio of methyl methacrylate: butyl acrylate of 1:2 to 6:1.

In various embodiments, the monomer mixture comprises methacrylic acid (MAA), methyl methacrylate (MMA) and butyl acrylate (BA) in amounts of 30-70 wt.-% MMA, 10-30 wt.-% BA and 20-30 wt.-% MAA.

All afore-described percentages relate, if not otherwise indicated, to the total number of monomers present in the monomer mixture and optionally add up to 100 wt.-%.

The ethylenically unsaturated monomer comprising a hydrophobic moiety, for example the ethylenically unsaturated $C_3$-$C_6$ carboxylic acid $C_{10}$-$C_{26}$ alkyl ester monomer, may have a solubility in water at 60 °C of < 0.01 wt.%.

The ethylenically unsaturated $C_3$-$C_8$ carboxylic acid monomers may have a solubility in water at 60 °C of > 25 wt.%.

The ethylenically unsaturated $C_3$-$C_5$ carboxylic acid $C_1$-$C_8$ alkyl ester monomers may have a solubility in water at 60 °C of > 0.01 wt.% and < 25 wt.%.

The solubility of the monomers, as referenced above, is the solubility in water as determined by gas chromatography according to Chai et al. (Chai et al. (2005) "Simplified multiple headspace extraction gas chromatographic techniques for determination of monomer solubility in water", Journal of Chromatography, Vol. 1070 (1-2), pages 225-229) and described in Chai et al. (Chai et al. (2005) "Measurement of the solubilities of vinylic monomers in water", Industrial & Engineering Chemistry Research, Vol. 44(14), pages 5256-5258).

The reaction mixture may further comprise the at least one stabilizer. The term "stabilizer", as used herein, relates to a class of molecules that can stabilize the droplets in a dispersion or emulsion, i.e. prevent coagulation or coalescence. The stabilizer molecules may adhere to or associate with the droplet surface. Furthermore the stabilizer may covalently react with the monomers upon polymerization. In various embodiments the stabilizer molecules comprise a hydrophilic and a hydrophobic part, with the hydrophobic part interacting with the droplet and the hydrophilic part be exposed to the solvent. The stabilizers may be surfactants and may bear an electric charge, for example may be anionic surfactants. Exemplary stabilizers that can be used in accordance with the present invention include sodium dodecyl sulfate (SDS).

Other preferred anionic surfactants useful as stabilizers in accordance with the present invention are compounds of the general formula

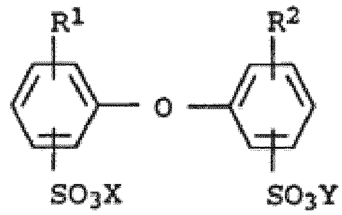

wherein $R^1$ and $R^2$ are independently hydrogen or $C_4$-$C_{24}$ alkyl provided that not both are hydrogen, and X and Y represent alkali metal ions or ammonium ions. $R^1$ and $R^2$ are preferably linear or branched alkyl with 6 to 18 carbon atoms or hydrogen, in particular alkyl with 6, 12 or 16 carbon atoms. X and Y are preferably sodium, potassium, ammonium, with sodium being particularly preferred. Preferred compounds are those wherein X and Y are sodium, $R^1$ is a branched alkyl group with 12 carbon atoms and $R^2$ is hydrogen or the same as $R^1$. Typically, technical mixtures are used that comprise 50 to 90 wt.-% of the monoalkylated product, such as Dowfax® 2A1 (Dow Chemical Company). Such compounds are widely known, for example from US-A 4,269,749, and are commercially available.

Still other suitable stabilizers are copolymerizable stabilizers, for example those of formula $H_2C{=}CHCH_2$-O-$CH_2$-CHR'-O-$(CH_2CH_2O)_m$-Z, wherein R' is -$CH_2$-O-$C_{9-15}$ alkyl, m is 3-50, preferably 5-40, more preferably 5-25, still more preferably 5-20, most preferably 5-15, and Z is $SO_3Na$ or $SO_3NH_4$. Such compounds are for example described in WO 2010/026065 and are commercially available, for example as SR-10 from ADEKA.

Alternative stabilizers/surfactants that may also be used according to the invention are known to those skilled in the art and include for example other known surfactants or hydrophobically modified polar polymers.

In various embodiments, the reaction mixtures described herein can further comprise other protective colloids, such as polyvinyl alcohols, in particular hydrophobically modified polyvinyl alcohols, cellulose derivatives or vinyl pyrrolidone. A more detailed description of suitable compounds can, for example, be found in Houben-Weyl, Methoden der Organischen Chemie, Bd. 14/1, Makromolekulare Stoffe, Georg-Thieme-Verlag, Stuttgart, 1961, pages 411-420.
The total amount of stabilizers/surfactants in the reaction mixture is typically in the range of 1 wt.-% to 30 wt.-%, preferably 1 to 10 wt.-%, more preferably 1.2 to 6 wt.-%, relative to the total weight of the reaction mixture. The total amount of the stabilizer/surfactant in the polymer system is preferably also in the range of 1 wt.-% to 30 wt.-%, preferably 1 to 10 wt.-%, more preferably 1.2 to 6 wt.-%, relative to the total weight of the HWSP solids. These stabilizer/surfactant concentrations ensure emulsion stability and the appropriate droplet size.
Exemplary methods for the production of the described latexes, preferably the above described HASE systems, include the steps of:

(i) preparing a reaction mixture by combining an aqueous solvent containing at least one stabilizer, preferably at least one surfactant, and a monomer mixture as defined above;
(ii) emulsifying said reaction mixture of step (i) to generate droplets containing the monomer mixture;
(iii) polymerizing the monomers of the monomer mixture contained in the droplets by continuous feeding of both the reaction mixture emulsion of step (ii) and a solution of a polymerization initiator, preferably a water-soluble polymerization initiator.

In these methods, the type of monomers and their amount may be defined identical to the preferred embodiments described above in connection with the described polymers systems. The stabilizers useful in such methods are also those described in more detail above.
In a first step of the method to synthesize the latexes of the invention, a reaction mixture is prepared. The reaction mixture contains the above-described monomer mixture and preferably at least one stabilizer/surfactant, as defined above, and an aqueous solvent. The monomer mixture and preferably the at least one stabilizer/surfactant may then be emulsified in the aqueous solvent, for example by vigorous stirring.
The aqueous solvent contains water as the main constituent or may consist of water. In various embodiments, the aqueous solvent contains water as the main constituent and additionally contains one or more non-aqueous solvents, provided that they are miscible with water in the concentration range given. In the aqueous solvent, non-aqueous solvents may be used in quantities of between 0 and 35 wt.%, but preferably less than 30 wt.% and in particular less than 25 wt.% relative to the total weight of the solvent. It is preferred that for the preparation of the emulsion, i.e. prior to the polymerization, the aqueous solvent does not contain any non-aqueous solvents. These are preferably only added after the polymerization is completed.
The aqueous solvent may contain the stabilizers/surfactants, usually in form of a solution of the stabilizer/surfactant.
The obtained reaction mixture or pre-emulsion may in some embodiments be subsequently homogenized in order to achieve miniemulsion droplets containing the above monomers with an even distribution especially with respect to size of the miniemulsion droplets and composition of the droplets resulting in a colloidally stable miniemulsion. In alternative embodiments, the obtained reaction mixture is polymerized by standard emulsion polymerization, i.e. without the high shear forces needed for miniemulsion polymerization.
Homogenization of the reaction mixture or pre-emulsion in order to form the stabilized miniemulsions described herein is achieved by combining the monomers in liquid form, for example in form of a solution in water in the presence of a stabilizer or surfactant under the action of a shear force, for example by a high-pressure homogenizer having an energy input in the range of from $10^3$ to $10^5$ J per second per liter of the emulsion and/or shear rates of at least 1000000/s. The shear rates can be readily determined by those skilled in the art by methods well-known in the field. The shear force can also be brought about by means of ultrasound, the ultrasonic treatment preferably occurring at 10 to 60 kHz and for no longer than 300 seconds, with an initial output power of the ultrasound source that produces a heating of at least 1°C, but no more than 10°C of the volumes combined at a mixing temperature of 25°C.
The high shear process, as used herein, can be any known process for dispersing or emulsifying in a high shear field. Examples for suitable processes are, for example, disclosed in DE 196 28 142 A1, page 5, lines 1-30, DE 196 28 143 A 1, page 7, lines 30-58, and EP 0 401 565 A 1.
The term "miniemulsion" or "emulsion", as used herein, relates to oil-in-water (O/W) emulsions, i.e. emulsions in which water is used in excess and is the continuous medium. In the described processes, stable droplets are obtained, which may typically have a size between 50 and 500 nm, preferably between 70 and 400 nm.
The polymerization of the monomer mixture is carried out by the appropriate polymerization process, preferably by radical polymerization. For this purpose, polymerization initiators can be used. Readily usable initiators may be thermally activatable, radiation activatable, such as UV initiators, or redox activatable and are preferably selected from radical initiators. Suitable radical initiators are widely known in the art and readily available and include organic azo or

peroxo compounds. The initiators are preferably water-soluble. When the polymerization is initiated by water-soluble initiator, free radicals generate in aqueous phase first and diffuse to water/monomer interface to initiate the polymerization inside droplets. The polymerization results in a highly soluble polymer after deprotonation ("neutralization step"), even with low contents of ionogenic groups by achieving a more even distribution of the latter along the polymer chains. Exemplary initiators used herein include peroxodisulfates, such as potassium peroxodisulfate (KPS) or ammonium peroxodisulfate (APS). The polymerization can be carried out at elevated temperature, for example a temperature in the range of 50-90°C, preferably 60-80°C, more preferably about 70°C. The polymerization time can range from 0.1 to 24 hours, preferably 0.5-8 hours, more preferably 1-6 hours.

The term "about", as used herein in connection with a numerical value, relates to a variance of ±20%, preferably ±10% of the respective value.

The amount of residual monomers can be further decreased chemically by radical post-polymerization, preferably by use of redox initiators, such as those described in DE-A 44 35 423, DE-A 44 19 518 and DE-A 44 35 422. Suitable oxidants for the post-polymerization include, but are not limited to hydrogen peroxide, t-butyl hydroperoxide, cumol hydroperoxide or alkali peroxosulfates. Suitable reducing agents include sodium disulfite, sodium hydrogen sulfite, sodium dithionite, sodium hydroxymethanesulfite, formamidine sulfinic acid, acetone bisulfate, ascorbic acid and reducing saccharides as well as water-soluble mercaptanes, such as mercapto ethanol. Post-polymerization with a redox initiator can be done in a temperature range of 10 to 100°C, preferably 20 to 90 °C. The redox agents can be added independently from each other either completely or continuously over a period of 10 minutes to 4 hours. To improve the efficiency of the redox agents, soluble salts of metal with different valencies, such as iron, copper or vanadium salts, can be added to the reaction mixture. Commonly, also complex forming agents are added, which keep the metal salts in solution under the reaction conditions.

To control the molecular weight of the polymers, a chain transfer agent may be used in the polymerization process. Suitable chain transfer agents are known in the art and include, without being limited thereto, various thiols, such as 1-dodecanethiol (=dodecyl mercaptan DDM). Such chain transfer agents may be used in the amounts necessary to adjust the molecular weight to the desired range, with useful amounts being in the range of 0 to 5 wt.-%, preferably 0 to 3 wt.-%, more preferably about 0.1 to 2 wt.-%, most preferably about 0.1 to 1.5 wt.-% with respect to total monomer mixture.

The weight average molecular weight $M_w$ can be determined as described above.

The methods described herein are preferably one-pot methods.

Those skilled in the art can use the method as described herein and vary the monomers, surfactants, radical initiators, the composition of the monomer mixtures, the homogenization method, and the reaction conditions, i.e. reaction temperature, reaction time, such that they will arrive at latexes with those rheological properties which are required for the intended purpose.

The latexes, for example those obtained according to the described methods, may, in preferred embodiments, be treated with a base which is capable to deprotonate a carboxylic acid to neutralize the latex. Suitable bases include various hydroxides, for example alkali hydroxides, alkali oxides or ammonium hydroxides or mixtures thereof. Also suited are various amines, including, but not limited to triethanolamine, ethoxylated diamines or polyamines, such as those commercially available under the trademark name Jeffamine® (Huntsman), ammonia, 2-amino-2-methylpropanol (AMP), dimethylaminoethanol (DMAE), 3-(dimethylamino)-1,2-propanediol, and mixtures thereof.

The water-based polymer systems described herein comprise, in addition to the above-described HWSP system, at least one organic additive. Said additive can be added prior to or, preferably, after neutralization of the HWSP emulsion. The water-based polymer systems described herein, can thus be produced by preparing the HWSP, neutralizing the HWSP with a suitable alkaline agent and combining it with the at least one organic additive. The organic additive may be comprised in amounts of of 0.1 to 10 wt.-%, preferably 0.5 to 5 wt.-%, relative to the polymer system.

In various embodiments, the organic additive is an amphiphilic additive, for example a hydrotrope. The organic additives used in accordance with the presently invention are only moderately soluble in water, i.e. have a solubility in water at 25°C of between 2 and 120 g/L, preferably 5-100 g/L, more preferably 15-80 g/L. It has surprisingly been found that additives having such a solubility can improved the condensed water resistance of the adhesive formulations containing the HWSP described herein.

For the determination of the solubility of the organic additives described herein, the GC-based method described above in connection with the solubilities of the monomers may be used. The solubilities of cyclodextrins can be taken from Sabadini et al. (Carbohydrate Research 2006, 341, pages 270-274), as determined by an equilibrium method proposed by Jozwiakowski and Connors (Carbohydrate Research 1985, 143, 51-59). The method is basically measuring residual amount of CD in a saturated solution after drying.

"Hydrotropes", as used herein, are additives that can solubilize hydrophobic compounds in aqueous solution and consist of a hydrophobic and a hydrophilic moiety (like surfactants) without any tendency in water to form aggregates themselves (unlike surfactants).

In various embodiments, the at least one organic additive has no micelle forming activity or a critical micelle

concentration (CMC) of greater $10^{-4}$ mol/L, preferably greater than $10^{-3}$ mol/L and more preferably greater than $10^{-2}$ mol/L. In line with the common understanding in the art, the critical micelle concentration (CMC) is defined herein as the concentration of surfactants above which micelles form and all additional surfactants added to the system go to micelles.

The organic or amphiphilic additives, preferably hydrotropes, typically have a weight average molecular weight $M_w$ < 10,000 g/mol, preferably < 2,500 g/mol, more preferably < 1,500 g/mol.

Suitable additives include, without limitation, monoalcohols, such as 1-butanol, 2-butanol, 1-pentanol, 1-hexanol, 2-hexanol, monomeric diols, such as octandiols, esters, such as Triacetin (1,2,3-propanetriol triacetate), ketones, such as 2-pentanone, 3-pentanone, 3-methyl-butanone, methylisobutyl ketone (MIBK), ethers, such as dibutylether, macromolecules, such as cyclodextrins, in particular beta-cyclodextrin, and combinations thereof. Preferred are beta-cyclodextrin and triacetin, particularly preferred is beta-cyclodextrin. Also included are derivatives of cyclodextrins, such as methyl, triacetyl, hydroxypropyl and hydroxyethyl derivatives, as long as these derivatives satisfy the solubility requirements set out above.

The polymer systems, including those obtainable by the above-described methods, have a HWSP content of 10 to 68 wt.-%, preferably 15 to 60 wt.-%, more preferably 15 to 50 wt.-%, relative to the complete polymer system. The remaining part of the system is made up by the continuous phase, for example water, the at least one stabilizer, and the organic additive, with the organic additive typically being used in amounts of 0.1 to 10 wt.-%, preferably 0.5 to 5 wt.-%, relative to the complete water-based polymer system. In various embodiments, the polymer system may have water content of up to 89.8 wt.-%, preferably 40 to 85 wt.-%, more preferably 50 to 80 wt.-% relative to the complete water-based polymer system. In various embodiments, the continuous phase of the dispersion, i.e. the dispersion medium, has a water content of 60 to 100 wt.-%, preferably 70 to 90 wt.-% relative to the total weight of the dispersion medium. The remaining part of the liquid phase can be made up by non-aqueous solvents, such as those disclosed above in connection with the aqueous solvents used in the synthesis methods.

Generally, in various embodiments, the polymer systems may have a solid content in the range of from about 10 to 60 wt.-%, preferably about 15 to 50 wt.-%, more preferably about 20 to 40 wt.-%.

The particle size of the polymer particles in the polymer systems can be a Z-average particle size of <500 nm, preferably in the range of 50 to 400 nm as determined by dynamic light scattering according to ISO 22412:2008.

The described polymer systems may be used for the formulation of adhesive systems. Such systems may include additional auxiliaries and additives, all of which are well known to those skilled in the art.

These adhesive systems may show an improved non-reactive setting mechanism for water-based adhesives which is called "dilution-induced thickening". This highly designed and counterintuitive setting behavior has not been described before for synthetic adhesive binder systems. In fact dilution normally tends to lower the viscosity of a polymeric system in solution, because the overall interaction between the individual macromolecular chains becomes reduced. This is especially true for water-based polyelectrolyte systems, which in concentrated solution are known to develop extraordinary high viscosities. This behavior can usually only be observed in the absence of large amount of salts, especially multivalent ions - which corresponds to aqueous solutions with low ionic strength. The physicochemical explanation is the distribution of similar electrical charges along the polyelectrolyte backbones with strongly cross-acting electrostatic repulsion which leads to an expansion of the individual polymer coils. The hydrodynamic radii of the macromolecules become strongly enlarged and lead to increased intra- and the intermolecular interactions, eventually contributing to the described significantly elevated viscosities in solution. However, upon dilution with water (or the addition of salts) the viscosity of such systems tend to drastically break down (or even collapse) after a certain threshold concentration is reached, which corresponds to falling below the limit of the average interaction distance between the electrical charges.

In practice this dilution-induced viscosity collapse can be an extremely critical and limiting factor. For example polyelectrolyte solutions are commonly used as labeling adhesives, an application where the adhesive at first has to wet and to pick up a label (certain tack properties are required), which is then transferred and attached to the substrate. The substrates most often are plastic containers or glass bottles. Additionally to the occasionally high speed of this application (e.g. > 50,000 bottles/hour on a single labeling machine) an unwanted dilution effect can be identified as a major challenge. Especially in summertime and under high humidity conditions large amounts of condensation water can be deposited at cold substrate interfaces - a situation which is very typical for the application needs of larger breweries or mineral water producers. As already described above, standard synthetic water-based glues, which are predominantly based on alkali-soluble/swellable emulsions (ASE) as polyelectrolyte-based adhesive, usually fail under these harsh conditions. Interestingly natural-based and long known casein-containing adhesives display a higher intrinsic performance in this particular application. Casein, which is a mixture of proteins from milk, can undergo certain conformational changes when it is cooled down, which leads to thickening and can counterbalance the described dilution effect. However, because casein as an adhesive component competes with the food market (and therefore inevitably is part of quite controversial discussions) and in view of its unsteady supply, costs and quality, a synthetic alternative with higher performance is highly desired.

The herein identified synthetic polymer systems (especially polyelectrolyte-based ones) are able to undergo

conformational changes and/or display increased intra- and intermolecular interactions upon dilution, thus resulting in a dilution-induced thickening mechanism that can improve the setting behavior of adhesives. In faint resemblance this effect can be described as casein mimetic behavior. In the context of the present description, "dilution induced thickening" is generally regarded as an intentionally adjusted phenomenon, which explicitly includes a reduced sensitivity towards dilution. The main motive of the described dilution-induced thickening approach is to intentionally disturb the hydrophobic domains by the addition of the organic additives, to carefully weaken the physical crosslinking sites in a controlled fashion at first. Generally speaking the strength of the hydrophobic association is very sensitive towards the concentration and the type of the additives in the system. Upon dilution with water the additive concentration in the adhesive system becomes reduced and the hydrophobic associations can partially regain their stability, which consequently leads to an increase in physical crosslinking and apparent viscosity. Obviously this behavior can be exploited to improve the setting behavior of adhesives.

Another mechanism which can contribute to obtain a dilution-induced thickening system can be the modification of the free energy of conformational changes for the related polymers by organic additives. In other words, the organic additives potentially can contribute to enhanced chain mobility and increased flexibility. Upon dilution with water this contribution would be reduced, which consequently can lead to a partial stiffening effect of the related macromolecules to increase the intra- and intermolecular interactions. Although the magnitude of this contribution is expected to be minor compared to the interference with the hydrophobic domains, it can be speculated to at least partially support the dilution-induced thickening effect.

To complete the potential interaction mechanisms of organic additives in the adhesive system additional positive effects apart from the dilution-induced thickening can be named. For example the organic additives can lower the surface tensions and therefore lead to an improved wetting behavior. Especially in case of interactions towards low energy surfaces this effect might be highly beneficial for application purposes and further support the already observed improved adhesive action of hydrophobically modified macromolecules in a cooperative manner.

The organic additive can principally also be used to reduce foam formation and aid to level out the surface of the adhesive. As mentioned before the film formation can be further assisted by lowering the effective $T_g$ of the system. Furthermore, organic additives with a higher partial vapor pressure compared to water can evaporate more easily and thus lead to faster drying of the adhesive films. Additionally certain organic additives might support the formation of an azeotrope with water, which can also be utilized for an improved drying behavior.

The organic additives can further be utilized to improve the solubility behavior of the hydrophobically-modified polymers. In case of the described HASE systems, the organic additives can additionally facilitate the neutralization procedure, where it is well known that upon neutralization in concentrated/high solid systems an unwanted viscosity peak can be observed, which is related to intermediate highly interacting (starlike) structures and polymer conformations that can hinder the application drastically. The addition of organic additives prior to neutralization can potentially limit or suppress this viscosity peak.

In view of the above, the present invention also encompasses a method for tuning the rheological properties of the above-described HWSP system by addition of organic additives. The organic additives can be used to interfere with the interaction of the hydrophobic parts of the polymers and as a result decrease the viscosity of the system. This viscosity decrease may be controlled by type and concentration of the additive added and may be used to provide an adhesive system with a viscosity desirable for a specific application, for example application onto a substrate by known techniques, and an improved surface wetting behavior.

The decrease in viscosity can be countered by dilution of the adhesive with water, which may occur as a consequence of the surface to which the adhesive is applied being wet. In such a case, the viscosity may increase again, i.e. the so-called dilution induced thickening occurs, or be maintained. As already noted above, such behavior is highly desirable in specific applications, such as labeling adhesives, particularly bottle labeling adhesives.

The polymer systems of the invention can be used as adhesives or components of adhesive compositions, in particular water-based adhesives, such as labeling adhesives, wood adhesives, paper converting (tissue & towel, packaging) adhesives or pressure sensitive adhesives (PSAs). A particularly preferred application field for the systems described herein are labeling adhesives, such as those for labeling of bottles, for example glass or plastic bottles, in particular returnable bottle labeling. The respective uses thus also from part of the present invention.

Such compositions, in particular adhesive compositions that comprise or consist of the polymer systems described herein are therefore also part of the present invention. These compositions may comprise the polymer systems as described herein either as such or in combination with further additives and auxiliaries routinely used in this field and well-known to those skilled in the art. Also encompassed is the use of the described polymer systems in such compositions.

Examples

*Materials:* Methyl methacrylate (MMA, Merck, >99 %), methacrylic acid (MAA, Merck, >99 %), butyl acrylate (BA, Acros Organics, 99 %), stearyl 25(EO) methacrylate (SPEGMA 1100, BASF), behenyl 25(EO) methacrylate

(BEPEGMA 1100, BASF), SR-10 (ADEKA), 1-dodecanthiol (DDM, Alfa Aesar, 98 %), were used as received.

*Preparation of hydrophobically modified alkali soluble emulsions:* To an aqueous solution of SPEGMA 1100 or BEPEGMA 1100 and SR-10 a mixture of (meth)acrylic monomers and dodecyl mercaptan (DDM) as a chain transfer agent was added. A preemulsion was prepared by vigorous stirring. Polymerization was initiated by ammonium persulfate (APS) at 80°C and carried out at the same temperature with continuous feeding of the preemulsion and APS aqueous solution for 4 h. After additional stirring at 80°C for 1 h, the reaction mixture was cooled to room temperature and then filtrated through a filter (80 μm) to obtain a hydrophobically modified alkali soluble emulsion.

***Particle sizes:*** Particle size of the obtained emulsion was determined by dynamic light scattering (DLS). Particle sizes are Z-average values as the most reliable and repeatable values according to ISO-13321 standard.

*Non-volatile content:* Non-volatile content of the emulsion was determined by drying at 105°C.

*Glass transition temperature:* The glass transition temperature (herein below also referred to as "$T_g$") of the copolymers is calculated from the $T_g$ of the homopolymers of each monomer used, i.e. the polymer obtained when each monomer is polymerized individually, as described above.

*Example 1: Compositions and basic characteristics of synthesized latexes*

For latex synthesis according to the above-described procedure the monomer mixtures listed in Table 1 were used, the particle sizes determined and glass transition temperatures calculated using Fox equation as described above. Compositions E1, E2 and E3 are according to the invention, E4' is a comparative example without associative monomer, and E5' is a commercially available acrylic emulsion (PM6210 from Henkel AG & Co. KGaA) also used as a comparative example.

Table 1: *Compositions and basic characteristics of synthesized latexes*

| | **E1** | **E2** | **E3** | **E4'** | **E5'** |
|---|---|---|---|---|---|
| **MMA (g)** | 10 | 10 | 17 | 10 | |
| **BA (g)** | 65 | 65 | 63 | 65 | |
| **MAA (g)** | 25 | 25 | 20 | 25 | |
| **SPEGMA (g)** | 5 | - | - | - | |
| **BEPEGMA (g)** | - | 5 | 5 | - | |
| **SR-10 (g)** | 1.5 | 1.5 | 1.5 | 2.5 | |
| **DDM (g)** | 0.8 | 0.8 | 0.8 | 0.8 | |
| **APS (g)** | 0.8 | 0.8 | 0.8 | 0.8 | |
| **Water (g)** | 161 | 161 | 161 | 103 | |
| **Estimated Tg* (°C)** | -6.1 | -6.1 | -5.7 | -6.1 | |
| **Dz (nm)** | 374 | 338 | 326 | 378 | <500 |
| **PDI** | 0.092 | 0.009 | 0.046 | 0.505 | |
| **Non-volatiles (%) Calc./found** | 40/38.9 | 40/38.5 | 40/38.8 | 50/48.4 | |
| **Apparent pKa** | 8.0 | n.d. | n.d. | 8.2 | 8.1 |
| * Glass transition temperatures are calculated according to Fox Equation as described above. | | | | | |

*Example 2: Effects of additives on condensed water resistance*

The emulsions E1, E2, E3 E4' and E5' from example 1 were neutralized by addition of ammonia solution (25%) at 60°C to be pH 7.9-8.2 to obtain neutralized polymer solutions NE1, NE2, NE3, NE4', and NE5', respectively. Additives were added to be 1-3 wt.-% prior to condensed water resistance tests. Each sample was individually applied on a metalized paper label by using a 24μm applicator and the label was adhered on a wet cold bottle adjusted at 10°C by ice water. The labeled bottles were stored at room temperature for 1 h in water-vapor saturated air and then the bottles were dried overnight to observe fiber tear. Effect of additives on condensed water resistance was examined by comparing fiber tear in the presence and absence of the additives, i.e. using samples without additive as a reference. The results

are shown in Table 2. It was found that additives having solubility in water in the range of 18-80 g/L effectively improved condensed water resistance.

Table 2: *Effects of additives on condensed water resistance*

| Additive (amount) | Solubility in water (g/L) | NE1 | NE2 | NE3 | NE4' | NE5' |
|---|---|---|---|---|---|---|
| **None** | - | - | - | - | - | - |
| **1,4-butandiol (3 wt.%)** | miscible | lowered | slight or no effect | slight or no effect | slight or no effect | slight or no effect |
| **γ-cyclodextrin (1 wt.%)** | 249.2 | slight or no effect | slight or no effect | slight or no effect | slight or no effect | slight or no effect |
| **α-cyclodextrin (1 wt.%)** | 129.5 | slight or no effect | slight or no effect | slight or no effect | slight or no effect | slight or no effect |
| **1-butanol (3 wt.%)** | 80 | Highly improved | Moderately improved | Moderately improved | slight or no effect | slight or no effect |
| **1,2,3-propanetriol triacetate (3 wt.%)** | 72 | Highly improved | Highly improved | Highly improved | slight or no effect | slight or no effect |
| **1-pentanol (3 wt.%)** | 22.4 | Moderately improved | Highly improved | Moderately improved | slight or no effect | slight or no effect |
| **β-cyclodextrin (1 wt.%)** | 18.4 | Highly improved | Highly improved | Highly improved | slight or no effect | slight or no effect |
| **Heptanol (3 wt.%)** | 1.74 | slight or no effect | slight or no effect | slight or no effect | slight or no effect | slight or no effect |
| **2,2,4-Trimethyl-1,3-pentanediol diisobutyrate (3 wt.%)** | 0.42 | lowered | slight or no effect | lowered | slight or no effect | slight or no effect |

*Example 3: Formulation*

The emulsion E3 and 1,2,3-propanetriol triacetate (TA) as an additive were formulated as follows: The emulsion E3 (170 g) was placed in a 2L separable flask and diluted by distilled water (387 g). After addition of Foamaster WO2323 (5 g), the mixture was heated to 50°C with vigorous stirring and then neutralized with 25% ammonia aqueous solution to have a pH of 7.9-8.2. Meribond 1100 (50 g) was added at the same temperature and the mixture was stirred at 85°C for 10 minutes. After cooling to 40°C, TA (22.7 g) and Acticide MBS (2 g) were added. Viscosity of the mixture was adjusted to be 65,000-70,000 mPas by addition of distilled water to obtain formulated mixture F1. The formulated F1 was further examined with regard to its properties by comparing it with prior art bottle labeling adhesives Aquence GL702N (F2') and Aquence XP190 (F3') from Henkel (Table 3).

Condensed water resistance tests of F1, F2' and F3' were performed by following the above described procedure (Example 2). Their condensed water resistance was examined after 3 and 24 h.

Wet tack was measured in mm/kp (1 kp = 9.80665 N) on a Fipago tack tester (Ströhlein instruments) at room temperature. The sample was applied on a label and then the label was immediately transferred so that its coated side covered on one end of an immobile substrate and on the other end of a mobile glass plate which was fixed on a mobile pendulum shaft of the apparatus. After 3 seconds, a roller automatically passed over the label and pressed it uniformly

against the mobile substrate. One end of the label was then pressed firmly against the immobile substrate and after the elapse of a further 2 seconds the pendulum shaft was automatically released and dropped under its own weight, thus peeling the label from the mobile substrate. The peeling force was measured by the instrument and displayed on a scale from 0 (=no peel resistance) to 100 (=label failed to peel off the mobile substrate).

The wet-out properties of the adhesive were measured in conjunction with the Fipago tack test method described above. After the completion of the tack test, the presence of adhesive on the surface of the mobile substrate was visually inspected. A perfect wet-out will result in an adhesive trace that is visible over the full area of previous contact between the label and the mobile substrate. In contrast, adhesives with limited wet-out properties will only partially trace the surface of the mobile substrate. The % wet-out was therefore visually estimated as the % of the initial contact surface area, between the label and the mobile substrate that was marked with an adhesive trace following each Fipago tack test.

Removability of labels was examined after being aged in a rain simulator for eight cycles of 10 minute rain shower with 50 min interval. Caustic washability of labelled bottles was examined at 80°C in 2% NaOH aqueous solution by measuring wash-off time.

Table 3: *Formulation and properties of formulated bottle labeling adhesives*

| | **F1** | **F2'** | **F3'** |
|---|---|---|---|
| **Foamaster WO2323** | 5.0 g | - | - |
| **Water** | 170 g | | |
| **HWSP** | E3: 387 g | | |
| **Meribond 1100** | 50 g | | |
| **25% $NH_3$ solution** | 22.1 g | | |
| **Additive** | TA: 22.7 g | | |
| **Acticide MBS** | 2.0 g | | |
| **Type** | synthetic | casein | synthetic |
| **pH** | 8.1 | <8.2 | <8.2 |
| **Viscosity (mPa·s)** | 69,300 | <70,000 | <70,000 |
| **Condensed water resistance 3 h** | Excellent | Excellent | Satisfactory |
| **Condensed water resistance 24 h** | Excellent | Poor | Poor |
| **Wet tack and wet-out** | Satisfactory | Satisfactory | Satisfactory |
| **Removability** | Satisfactory | Satisfactory | Satisfactory |

It was found that F1 exhibited surprisingly good condensed water resistance with satisfactory wet tack, wet-out, and washability as a returnable bottle labeling adhesive.

## Claims

**1.** Water-based polymer system comprising

(i) at least one hydrophobically modified water soluble polymer (HWSP) in an amount of 10 to 68 wt.-%, preferably 15 to 60 wt.-%, more preferably 15 to 50 wt.-%, relative to the polymer system, said HWSP having a weight average molecular weight Mw below 1,000,000 g/mol, preferably between 15,000 and 500,000 g/mol, more preferably between 20,000 g/mol and 200,000 g/mol, most preferably 25,000 to 100,000 g/mol, wherein the at least one HWSP is obtainable by polymerizing a reaction mixture comprising a monomer mixture comprising:

(a) at least one ethylenically unsaturated nonionic monomer comprising a hydrophobic moiety, preferably a substituted or unsubstituted $C_{10}$-$C_{26}$ hydrocarbon moiety, more preferably a substituted or unsubstituted $C_{10}$-$C_{26}$ alkyl moiety, wherein the monomer is optionally an ethylenically unsaturated $C_3$-$C_6$ carboxylic acid ester of formula (I) $R_1HC=CHR_2-(CH_2)_w-C(=O)-[O-(CH_2)_x]_y-OR_3$, wherein $R_1$ and $R_2$ are independently H or $CH_3$, $R_3$ is $C_{10-26}$ alkyl, w is 0 or 1, x is 1-10, and y is 1-100, in an amount of 0.01 to 10 wt.-%, preferably

0.1 to 10 wt.-%, more preferably 0.5 to 5 wt.-% relative to the monomer mixture;
(b) at least one ethylenically unsaturated anionic monomer, preferably an ethylenically unsaturated $C_3$-$C_8$ carboxylic acid monomer, in an amount of 15 to 30 wt.-% relative to the monomer mixture; and
(c) at least one ethylenically unsaturated nonionic $C_3$-$C_5$ carboxylic acid $C_1$-$C_8$ alkyl ester monomer, in an amount of 35 to 84.99 wt.-%, preferably 65 to 80 wt.-% relative to the monomer mixture;

(ii) at least one organic additive having a solubility in water at 25°C of between 2 and 120 g/L, preferably 5-100 g/L, more preferably 15-80 g/L, in an amount of 0.1 to 10 wt.-%, preferably 0.5 to 5 wt.-%, relative to the polymer system;
(iii) at least one stabilizer in an amount of 1 to 30 wt.-%, preferably 1 to 10 wt.-%, more preferably 1.2 to 6 wt.-%, based on the HWSP solid content; and
(iv) water.

**2.** The water-based polymer system of claim 1, wherein the HWSP is a hydrophobically modified alkali soluble associative (HASE) polymer, preferably an acrylic HASE polymer.

**3.** The water-based polymer system of claim 1 or 2, wherein the ethylenically unsaturated anionic monomers are selected from methacrylic acid (MAA), acrylic acid (AA), fumaric acid, methyl maleic acid, maleic acid, itaconic acid, crotonic acid, or mixtures thereof, preferably methacrylic acid, acrylic acid or mixtures thereof, more preferably methacrylic acid.

**4.** The water-based polymer system of any one of claims 1 to 3, wherein the ethylenically unsaturated carboxylic acid alkyl ester monomers are selected from acrylic acid alkyl esters, methacrylic acid alkyl esters or mixtures thereof.

**5.** The water-based polymer system of any one of claims 1 to 4, wherein the monomer mixture comprises as component (c) at least two ethylenically unsaturated $C_3$-$C_5$ carboxylic acid $C_1$-$C_8$ alkyl ester monomers comprising a first ethylenically unsaturated $C_3$-$C_5$ carboxylic acid $C_1$-$C_8$ alkyl ester monomer, the homopolymer of which has a glass transition temperature $T_g$ >25°C, and a second ethylenically unsaturated $C_3$-$C_5$ carboxylic acid $C_1$-$C_8$ alkyl ester monomer, the homopolymer of which has a glass transition temperature $T_g$ < 25°C.

**6.** The water-based polymer system of any one of claims 1 to 5, wherein the at least one ethylenically unsaturated monomer comprising a hydrophobic moiety is

(i) a methacrylic acid ester with a moiety comprising or consisting of an $C_{10}$-$C_{26}$ alkyl group, preferably a methacrylic acid $C_{10}$-$C_{26}$ alkyl ester monomer or a methacrylic acid polyoxyalkylene $C_{10}$-$C_{26}$ alkyl ester monomer, more preferably a methacrylic acid $C_{10}$-$C_{22}$ alkyl ester monomer or a methacrylic acid polyoxyalkylene $C_{10}$-$C_{22}$ alkyl ester monomer, most preferably a methacrylic acid $C_{12}$-$C_{18}$ alkyl ester monomer or a methacrylic acid polyethylene oxide $C_{10}$-$C_{22}$ alkyl ester monomer; or
(ii) an acrylic acid ester with a moiety comprising or consisting of an $C_{10}$-$C_{26}$ alkyl group, preferably an acrylic acid $C_{10}$-$C_{26}$ alkyl ester monomer or an acrylic acid polyoxyalkylene $C_{10}$-$C_{26}$ alkyl ester monomer, more preferably an acrylic acid $C_{10}$-$C_{22}$ alkyl ester monomer or an acrylic acid polyoxyalkylene $C_{10}$-$C_{22}$ alkyl ester monomer, most preferably an acrylic acid $C_{12}$-$C_{18}$ alkyl ester monomer or an acrylic acid polyethylene oxide $C_{10}$-$C_{22}$ alkyl ester monomer; or
(iii) a mixture of (i) and (ii).

**7.** The water-based polymer system of any one of claims 1 to 6, wherein the at least one ethylenically unsaturated $C_3$-$C_8$ carboxylic acid monomer is selected from the group consisting of methacrylic acid (MAA) and acrylic acid (AA), the at least one ethylenically unsaturated $C_3$-$C_5$ carboxylic acid $C_1$-$C_8$ alkyl ester monomer is a mixture of methyl methacrylate (MMA) and butyl acrylate (BA), and the at least one ethylenically unsaturated monomer comprising a hydrophobic moiety is selected from the group consisting of lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate, octadecyl 25(EO) (meth)acrylate, eicosanyl 25(EO) (meth)acrylate, behenyl 25(EO) (meth)acrylate and mixtures thereof.

**8.** The water-based polymer system of any one of claims 1 to 7, wherein the reaction mixture further comprises a chain transfer agent, preferably in an amount of 0 to 3 wt.-%, more preferably 0.1 to 1.5 wt.-% relative to the monomer mixture.

**9.** The water-based polymer system of any one of claims 1 to 8, wherein the at least one stabilizer is comprised in the reaction mixture.

**10.** The water-based polymer system of any one of claims 1 to 9, wherein the at least one stabilizer is selected from the group consisting of sodium dodecyl sulfate (SDS), compounds of the general formula

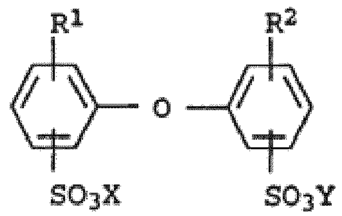

wherein $R^1$ and $R^2$ are independently hydrogen or $C_4$-$C_{24}$ alkyl, provided that not both are hydrogen, and X and Y represent alkali metal ions or ammonium ions, copolymerizable stabilizers of formula $H_2C$=$CHCH_2$-O-$CH_2$-CHR'-O-$(CH_2CH_2O)_m$-Z, wherein R' is -$CH_2$-O-$C_{9-15}$ alkyl, m is 3-50, preferably 5-40, more preferably 5-25, still more preferably 5-20, most preferably 5-15, and Z is $SO_3Na$ or $SO_3NH_4$, and combinations thereof.

**11.** The water-based polymer system of any one of claims 1 to 10, wherein the at least one organic additive is an amphiphilic additive, preferably selected from the group consisting of monoalcohols, monomeric diols, esters, ketones, ethers, macromolecules, and combinations thereof, most preferably β-cyclodextrin or triacetin.

**12.** The water-based polymer system of any one of claims 1 to 11, wherein the polymer system has a water content of up to 89.8 wt.-%, preferably 40 to 85 wt.-%, more preferably 50 to 80 wt.-% relative to the polymer system.

**13.** Adhesive composition comprising or consisting of the water-based polymer system according to any one of claims 1 to 12.

**14.** The adhesive composition of claim 13, wherein the adhesive composition is a returnable bottle labeling adhesive composition.

**15.** Use of the water-based polymer system according to any one of claims 1 to 12 as an adhesive, preferably a labeling adhesive, more preferably a returnable bottle labeling adhesive.

Europäisches Patentamt
European Patent Office
Office européen des brevets

# EUROPEAN SEARCH REPORT

Application Number
EP 15 18 1261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 896 027 A1 (ROHM & HAAS [US]) 10 February 1999 (1999-02-10) *Example 1, Samples 2-9, 12-18* * paragraph [0010] * * paragraph [0021] * ----- | 1-15 | INV. C08L5/16 C08K5/00 C09J133/00 C08K5/05 C08K5/11 C09J133/06 C08L33/06 |
| A | WO 2012/123633 A1 (UPM RAFLATAC OY [FI]; MITCHELL NOEL [DE]; KIVELAE MARKUS [FI]) 20 September 2012 (2012-09-20) * example 1 * ----- | 1-15 | |
| | | | TECHNICAL FIELDS SEARCHED (IPC) |
| | | | C08L C08K C09J |

The present search report has been drawn up for all claims

1

| Place of search | Date of completion of the search | Examiner |
|---|---|---|
| Munich | 18 January 2016 | Gerber, Myriam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 18 1261

This annex lists the patent family members relating to the patent documents cited in the above-mentioned European search report. The members are as contained in the European Patent Office EDP file on
The European Patent Office is in no way liable for these particulars which are merely given for the purpose of information.

18-01-2016

| Patent document cited in search report | Publication date | Patent family member(s) | Publication date |
|---|---|---|---|
| EP 0896027 A1 | 10-02-1999 | AU 749553 B2 | 27-06-2002 |
| | | AU 7619298 A | 11-02-1999 |
| | | BR 9802609 A | 08-02-2000 |
| | | CA 2243306 A1 | 29-01-1999 |
| | | CN 1208745 A | 24-02-1999 |
| | | DE 69800268 D1 | 28-09-2000 |
| | | DE 69800268 T2 | 15-03-2001 |
| | | EP 0896027 A1 | 10-02-1999 |
| | | ID 20646 A | 04-02-1999 |
| | | JP H11152411 A | 08-06-1999 |
| | | KR 100590815 B1 | 11-10-2006 |
| | | NZ 331019 A | 28-01-2000 |
| | | US 6063857 A | 16-05-2000 |
| WO 2012123633 A1 | 20-09-2012 | CN 103547444 A | 29-01-2014 |
| | | EP 2683546 A1 | 15-01-2014 |
| | | WO 2012123633 A1 | 20-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200185866 A
- US 2007240823 A
- DE 3807571 A1
- DE 3706095 A1
- EP 0358153 B1
- US 4754014 A1
- DE 4421823 A1
- WO 9222615 A
- US 4269749 A
- WO 2010026065 A
- DE 19628142 A1
- DE 19628143 A1
- EP 0401565 A1
- DE 4435423 A
- DE 4419518 A
- DE 4435422 A


### Non-patent literature cited in the description


- **J. BRANDRUP ; E. H. IMMERGUT ; E. A. GRULKE.** Polymer Handbook. Wiley, 2003
- **CHAI et al.** Simplified multiple headspace extraction gas chromatographic techniques for determination of monomer solubility in water. *Journal of Chromatography,* 2005, vol. 1070 (1-2), 225-229
- **CHAI et al.** Measurement of the solubilities of vinylic monomers in water. *Industrial & Engineering Chemistry Research,* 2005, vol. 44 (14), 5256-5258
- Methoden der Organischen Chemie. **HOUBEN-WEYL.** Makromolekulare Stoffe. Georg-Thieme-Verlag, 1961, vol. 14, 411-420
- **SABADINI et al.** *Carbohydrate Research,* 2006, vol. 341, 270-274
- **JOZWIAKOWSKI ; CONNORS.** *Carbohydrate Research,* 1985, vol. 143, 51-59